# EUROPÄISCHE PATENTSCHRIFT

(11) **EP 0 993 997 B1**
(45) Veröffentlichungstag und Bekanntmachung des Hinweises auf die Patenterteilung: **17.12.2003**
(21) Anmeldenummer: 99890322.3
(22) Anmeldetag: 12.10.1999
(51) Int. Cl.: B60R 16/02

(54) **Vorrichtung zum Anschliessen wenigstens eines elektrischen Verbrauchers an ein Stromkabel, insbesondere eines Fahrzeuges**
Device for connecting at least one electric consumer to a current supply cable, especially for vehicles
Dispositif permettant de brancher au moins un consommateur électrique à un cable d'alimentation, notamment pour véhicules

(30) Priorität: 12.10.1998 AT 169498
(43) Veröffentlichungstag der Anmeldung: 19.04.2000
(73) Patentinhaber: Fahrzeugelektrik, F. Aspöck Ges. m.b.H. & Co. KG, 4722 Peuerbach (AT)
(72) Erfinder: Amrhein, Wolfgang, Prof. Dr., 4040 Linz (AT); Baumgartner, Christoph, 4091 Vichtenstein (AT)
(74) Vertreter: Strasse, Joachim, Dipl.-Ing.

(56) Entgegenhaltungen:
- DE-A- 19 526 809

## Beschreibung

Die Erfindung bezieht sich auf eine Vorrichtung zum Anschließen wenigstens eines elektrischen Verbrauchers an ein mit Steuersignalen für den Verbraucher beaufschlagbares Stromkabel, insbesondere eines Fahrzeuges, mit in einem Gehäuse zusammengeführten Anschlußleitungen einerseits für das Stromkabel und anderseits für den Verbraucher, wobei das Gehäuse eine Auswerteschaltung für die über das Stromkabel übertragbaren Steuersignale und einen an die Auswerteschaltung angeschlossenen Leistungsschalter für wenigstens eine verbraucherseitige Anschlußleitung aufweist.

Zur Stromversorgung beispielsweise einer Lichtanlage oder anderer elektrischer Verbraucher eines Fahrzeuges werden die Verbraucher an ein Stromkabel angeschlossen, und zwar über Verbindungskabel, die an ihrem freien Anschlußende ein Gehäuse mit Anschlußkontakten vorzugsweise in Form von Stechkontakten aufweisen, so daß die Stechkontakte zur elektrischen Verbindung des Verbrauchers mit dem Stromkabel lediglich über das Gehäuse durch die Isolierung des Stromkabels in dessen Leiterlitzen einzudrücken sind. Die an das Stromkabel angeschlossenen Verbraucher werden über den Verbrauchern zugehörige Leistungsschalter betätigt, die über Steuerleitungen angesteuert werden. Um den mit den Steuerleitungen verbundenen Verkabelungsaufwand vermeiden zu können, wurde bereits vorgeschlagen (WO 94/16924 A1, DE 24 33 924 A1), das Stromkabel mit Steuersignalen für die Verbraucher zu beaufschlagen, so daß gesonderte Steuerleitungen entfallen. Voraussetzung für ein ausgewähltes Ansteuern der einzelnen Verbraucher ist dabei, daß die Steuersignale mit einer Kennung für die anzusteuernden Verbraucher versehen werden, während den Verbrauchern Erkennungs- und Auswerteschaltungen zugeordnet sind, die nur auf die Steuersignale mit der Kennung des ihnen zugehörigen Verbrauchers ansprechen. Dies bedeutet, daß ausschließlich mit entsprechenden Erkennungs- und Auswerteschaltungen ausgerüstete Verbraucher über das Stromkabel angesteuert werden können.

Zur Vermeidung dieser Nachteile wurde bereits ein Bordnetz für ein Fahrzeug vorgeschlagen (DE 195 26 809 A1, gemäß dem Oberbegrift von Anspruch 1), bei dem die elektrischen Verbraucher mit Hilfe von Stekkern an ein Stromkabel angeschlossen werden, die einen Leistungsschalter für den jeweils angeschlossenen Verbraucher und eine Auswerteschaltung für die über das Stromkabel übertragbaren Steuersignale aufweisen, so daß der Leistungsschalter bei einer entsprechenden Ansteuerung des Verbrauchers über die Auswerteschaltung betätigt werden kann. Da die Auswerteschaltung nicht Teil des Verbrauchers ist, sondern eine gesonderte Baueinheit bildet, ist der. Anschluß herkömmlicher Verbraucher an das Stromkabel möglich. Allerdings ist beim Schalten des Leistungsschalters mit Schaltstromspitzen zu rechnen, was sich nachteilig auf die Lebensdauer des jeweils angeschlossenen Verbrauchers auswirkt. Dazu kommt, daß zur Überwachung der einzelnen Verbraucher in den Steckern der jeweilige Verbraucherstrom gemessen und an eine übergeordnete Steuereinrichtung gemeldet werden muß, was einen erheblichen Konstruktionsaufwand mit sich bringt.

Ausgehend von der DE 195 26 809 A1 liegt somit der Erfindung die Aufgabe zugrunde, einen verbraucherschonenden Anschluß der einzelnen Verbraucher an das Stromkabel zu schaffen, ohne auf das einfache Ein- und Ausschalten der Verbraucher in Abhängigkeit von den über das Stromkabel empfangenen Steuersignalen verzichten zu müssen.

Die Erfindung löst die gestellte Aufgabe dadurch, daß der Leistungsschalter über eine Strombegrenzungsschaltung und über eine vorprogrammierte Taktstufe ansteuerbar ist.

Durch die Ansteuerung des Leistungsschalters über eine Strombegrenzungsschaltung werden in einfacher Weise Schaltstromspitzen vermieden, was eine größere Standzeit für die Verbraucher mit sich bringt. Darüber hinaus kann der Leistungsschalter über eine vorprogrammierte Taktstufe angesteuert werden, um einen allmählichen Anstieg des effektiven Stromes zu erreichen, was die zu erwartende Lebensdauer des jeweils angeschlossenen Verbrauchers zusätzlich erhöht. Durch die zeitliche Taktung des Leistungsschalters kann der Anstieg der effektiven Stromstärke über das jeweils vorgegebene Programm an die Anforderungen der anzuschließenden Verbraucher vorteilhaft angepaßt werden.

Ist zum Betrieb eines angeschlossenen Verbrauchers eine Steuerschaltung erforderlich, wie dies beispielsweise beim Betrieb von Fahrzeugleuchten mit Leuchtdioden der Fall ist, so kann diese Steuerschaltung für den anzuschließenden Verbraucher ebenfalls im Gehäuse zusammen mit der Auswerteschaltung angeordnet werden, über die ja die Steuerschaltung angesteuert werden muß.

Da zur Ansteuerung der an ein gemeinsames Stromkabel angeschlossenen, unterschiedlichen Verbraucher die den Leistungsschalter für den jeweiligen Verbraucher steuernde Auswerteschaltung auf die dem Verbraucher zugeordnete Kennung ansprechen muß, muß die Auswerteschaltung mit einer entsprechenden Erkennungsstufe versehen sein. Damit diese auf den jeweiligen Verbraucher abgestimmte Erkennungsstufe nicht unterschiedliche Anschlußvorrichtungen erfordert, kann die Auswerteschaltung eine auf Steuersignale für unterschiedliche Verbraucher ein- bzw. umstellbare Erkennungsstufen aufweisen. Durch diese Maßnahme können übereinstimmende Anschlußvorrichtungen zumindest für Gruppen unterschiedlicher Verbraucher einheitlich hergestellt werden, weil ja die Zuordnung zu einem Verbraucher nachträglich durch die Ein- bzw. Umstellung der Erkennungsstufe vorgenommen wird. Besonders einfache Handhabungsbedingungen ergeben sich in diesem Zusammenhang, wenn die Erkennungsstufe über eine von auβerhalb des Gehäuses zugängliche Eingabeeinrichtung ein- bzw. umgestellt werden kann.

Obwohl die elektrische Verbindung der Anschlußvorrichtung für die einzelnen Verbraucher mit dem Stromkabel in unterschiedlicher Art, beispielsweise über Klemmkontakte, erfolgen kann, empfiehlt es sich, insbesondere beim Einsatz für Lichtanlagen von Fahrzeugen, mit der Herstellung des elektrischen Kontaktes das Gehäuse mit dem Stromkabel in einem Arbeitsgang auch mechanisch zu verbinden. Aufgrund der Kleinheit der für die Schaltungen eingesetzten elektronischen Bauteile braucht das Gehäuse kaum größer als herkömmliche Kabelverbinder ausgebildet zu sein, wobei die elektronischen Bauteile feuchtigkeitsdicht im Gehäuse eingegossen werden können. Weist das Gehäuse Stechkontakte zum Anschluß an das Stromkabel auf, so ergeben sich besonders einfache Montageverhältnisse, weil das Gehäuse mit den für die Ansteuerung der jeweiligen Verbraucher vorgesehenen Schaltkreisen lediglich durch ein Einstechen der Stechkontakte in die Litzen des Stromkabels anzuschließen ist. Ist das Stromkabel in üblicher Weise zweiadrig ausgeführt, so ist beim Anschluß des Gehäuses zwischen den beiden Adern zu unterscheiden, was eine unsymmetrische Ausbildung des Kabelquerschnittes und der gehäuseseitigen Aufnahme für das Stromkabel empfehlenswert macht.

Damit bei einer Stromversorgungsanlage für mehrere elektrische Verbraucher eines Fahrzeuges, insbesondere eines Fahrzeuganhängers, die einzelnen Verbraucher in vorteilhafter Weise über eine übergeordnete Steuereinrichtung überwacht werden können, kann die Steuereinrichtung eine Überwachungsschaltung aufweisen, die aus einem Geber für den gesamten Verbraucherstrom und einer an diesen Geber angeschlossenen, mit dem Sollwert des Verbraucherstromes für die eingeschalteten Verbraucher beaufschlagbaren Vergleicherstufe besteht. Mit dieser Überwachungsschaltung wird der Umstand, daß sich der gesamte Verbraucherstrom mit dem Zuschalten eines Verbrauchers ändert, vorteilhaft für die Überprüfung der Funktion des jeweils zugeschalteten Verbrauchers ausgenützt.

In der Zeichnung ist der Erfindungsgegenstand beispielsweise dargestellt. Es zeigen
- Fig. 1: eine Stromversorgungsanlage der elektrischen Verbraucher eines Fahrzeuges mit erfindungsgemäßen Anschlußvorrichtungen für die Verbraucher in einem schematischen Blockschaltbild,
- Fig. 2: die Steuerung für eine solche Stromversorgungsanlage in einem vereinfachten Blockschaltbild,
- Fig. 3: eine erfindungsgemäße Anschlußvorrichtung für die einzelnen Verbraucher in einem vereinfachten Blockschaltbild und
- Fig. 4: eine an ein Stromkabel angeklemmte Anschlußvorrichtung in einem schematischen Querschnitt.

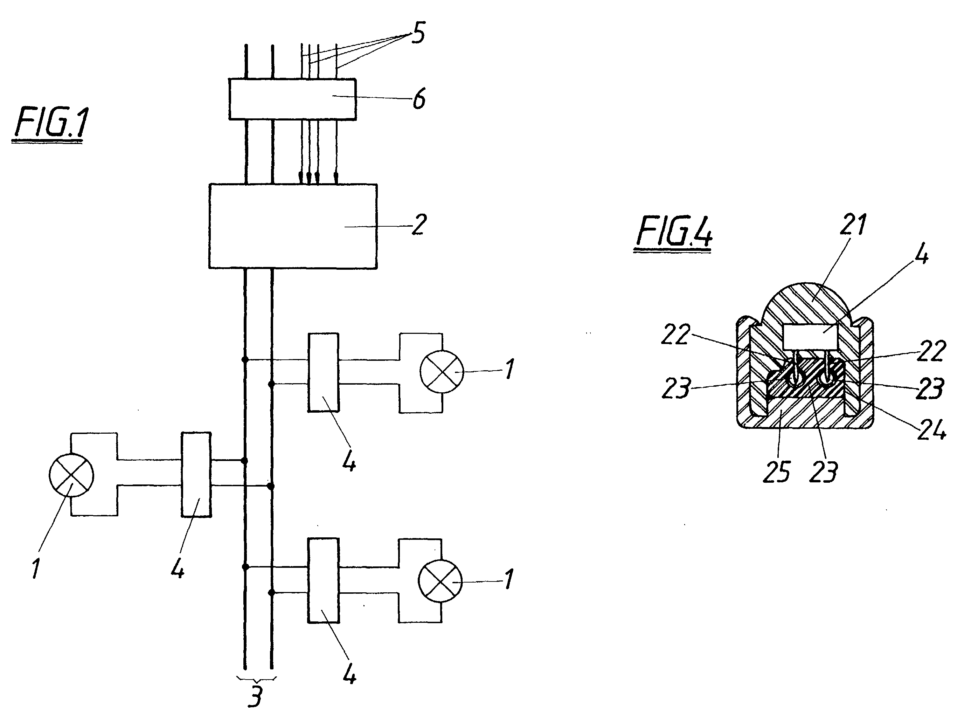

Gemäß der Fig. 1 besteht die dargestellte Stromversorgungsanlage für die elektrischen Verbraucher 1 eines Fahrzeuges, insbesondere für die Leuchten einer Lichtanlage, aus einer Steuereinrichtung 2 für die einzelnen mit den Adern eines Stromkabels 3 elektrisch verbundenen Anschlußvorrichtungen 4, über die die Verbraucher 1 an das Stromkabel 3 angeschlossen sind. Die Ansteuerung der Steuereinrichtung 2 selbst erfolgt über Steuersignalleitungen 5, die über z. B. in Bedienungsfeldern zusammengefaßte Steuerschalter beaufschlagt werden. Die Stromversorgungsanlage gemäß der Fig. 1 ist für einen Fahrzeuganhänger vorgesehen, der in herkömmlicher Weise über eine Steckkupplung 6 elektrisch mit einem Zugfahrzeug verbunden wird. Dementsprechend wird das Stromkabel 3 des Fahrzeuganhängers über die Steckkupplung 6 an die Fahrzeugbatterie des Zugfahrzeuges angeschlossen. Außerdem liegen die Steuersignale der dem Zugfahrzeug zugehörigen Steuerschalter über die Steuersignalleitungen 5 an der Steckkupplung 6 an.

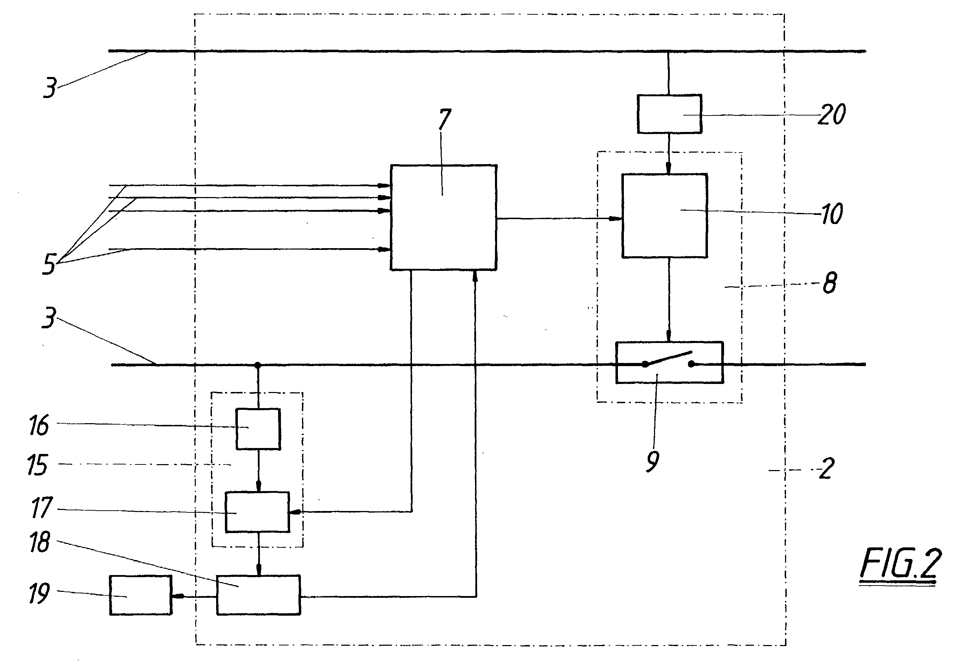

Wie der Fig. 2 entnommen werden kann, weist die Steuereinrichtung 2 eine Codiereinrichtung 7 auf, über die eine Schaltstufe 8 zur Modulation von Stromimpulsen im Stromkabel 3 angesteuert wird. Den über die einzelnen Steuersignalleitungen 5 ankommenden Steuersignalen wird in der Codiereinrichtung 7 eine für die jeweilige Steuersignalleitung 5 bzw. den zugehörigen Steuerschalter kennzeichnende Kennung zugeordnet, die dem codierten Steuersignal vorangestellt wird. Mit Hilfe der Schaltstufe 8 wird dann der Strom im Stromkabel 3 entsprechend der codierten Kennung und dem codierten Steuersignal des jeweiligen Steuerschalters einer Impulsmodulation unterworfen. Zu diesem Zweck ist in das Stromkabel 3 ein elektronischer Leistungsschalter 9 eingeschaltet, der über eine Steuerschaltung 10 betätigt wird, die am Ausgang der Codiereinrichtung 7 anliegt. Mit Hilfe der auf diese Weise erzeugten Stromimpulse können die codierten Kennungen und Steuersignale über das Stromkabel 3 zu den Anschlußvorrichtungen 4 übertragen werden.

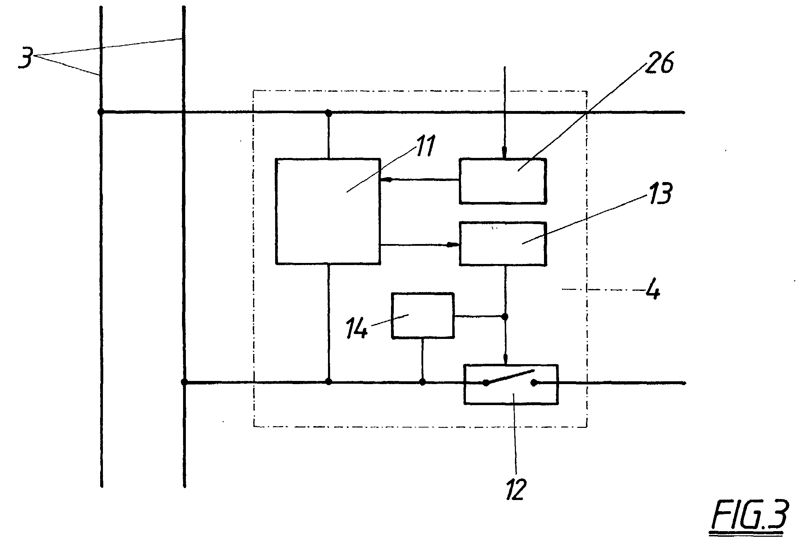

Gemäß der Fig. 3 ist in den Anschlußvorrichtungen 4 eine Auswerteschaltung 11 für die über das Stromkabel 3 übertragenen Stromimpulsfolgen vorgesehen. Diese Auswerteschaltung 11 betätigt einen elektronischen Leistungsschalter 12, über den der jeweils angeschlossene Verbraucher 1 mit elektrischer Energie versorgt wird. Die Anordnung ist dabei so getroffen, daß die Ansteuerung des Leistungsschalters 12 über eine vorprogrammierte Taktstufe 13 erfolgt, die aufgrund sich ändernder Taktzeiten einen allmählichen Anstieg des effektiven Verbraucherstromes während einer vorgegebenen Einschaltzeitspanne bewirkt. Da außerdem der Leistungsschalter 12 über eine Strombegrenzungsschaltung 14 angesteuert wird, kann eine vorteilhafte Strombelastung des Verbrauchers 1 sichergestellt werden, was sich in einer entsprechenden Verlängerung der Lebensdauer des Verbrauchers 1 unmittelbar auswirkt.

Wird ein bestimmter Verbraucher 1 durch den zugehörigen Steuerschalter vom Zugfahrzeug her betätigt, so liegt dessen Steuersignal über die zugehörige Steuersignalleitung 5 an der Codiereinrichtung 7 der Steuereinrichtung 2 an und wird mit einer dem Steuerschalter zugeordneten Kennung codiert, um mit Hilfe des die Kennung und das Steuersignal beinhaltenden Codes eine entsprechende Stromimpulsmodulation über die Schaltstufe 8 vorzunehmen. Die erzeugten Stromimpulsfolgen werden über das Stromkabel 3 den einzelnen Anschlußvorrichtungen 4 zugeführt, von denen jedoch nur die Anschlußvorrichtungen ansprechen, deren Auswerteschaltung 11 auf die codierte Kennung abgestimmt ist.

Da sich der gesamte Verbraucherstrom mit dem Zuschalten eines Verbrauchers 1 ändert, kann über diese Verbraucherstromänderung die Funktion des zugeschalteten Verbrauchers 1 überprüft werden. Die Steuereinrichtung 2 weist zu diesem Zweck eine Überwachungsschaltung 15 auf, die aus einem Geber 16 für den gesamten Verbraucherstrom und einer angeschlossenen Vergleicherstufe 17 besteht. Die über die Codiereinrichtung 7 beaufschlagte Vergleicherstufe 17 stellt den Sollwert des Verbraucherstromes für die eingeschalteten Verbraucher 1 zur Verfügung, so daß beim Zuschalten eines weiteren Verbrauchers 1 der damit verbundene Stromanstieg überwacht werden kann. Kann kein ordnungsgemäßer Stromanstieg festgestellt werden, so kann in Abhängigkeit vom jeweiligen Verbraucher 1 über eine zusätzliche Steuerstufe 18 die Codiereinrichtung 7 im Sinne der Betätigung eines Ersatzverbrauchers angesteuert werden, wenn über einen anderen Verbraucher 1 eine Ersatzfunktion für den ausgefallenen Verbraucher möglich ist, wie dies beispielsweise beim Ausfallen eines Blinklichtes der Fall ist, das zur Durchführung der ausgefallenen Blinkfunktion durch ein Rücklicht ersetzt werden kann. Zusätzlich kann der Verbraucherausfall über eine Anzeige 19 sichtbar gemacht werden.

Die Steuereinrichtung 2 läßt sich aufgrund der Schaltstufe 8 zur Stromimpulsmodulation in einfacher Weise auch zur Spannungskonstanthaltung einsetzen, weil sich die an den Verbrauchern 1 anliegende effektive Spannung über eine Strommodulation beeinflussen läßt. Aus diesem Grunde wird die Steuerschaltung 10 für den Leistungsschalter 9 der Schaltstufe 8 mit einem an der Versorgungsspannung anliegenden Spannungsregler 20 beaufschlagt, wie dies in der Fig. 2 angedeutet ist.

Wie der Fig. 4 entnommen werden kann, ist die Anschlußvorrichtung 4 in einem mit Kunststoff feuchtigkeitsdicht ausgegossenen Gehäuse 21 angeordnet, wobei die elektrische Verbindung zwischen dem Stromkabel 3 und der Auswerteschaltung 11 und dem Leistungsschalter 12 über im Gehäuse 21 eingegossene Stechkontakte 22 hergestellt wird, die in die Adern 23 des Stromkabels 3 einstechen, um die erforderliche Kontaktverbindung herzustellen, wenn das Gehäuse 21 an das Stromkabel 3 angedrückt wird. Da der Querschnitt des Stromkabels 3 und die Aufnahme 24 des Gehäuses 21 für das Stromkabel 3 unsymmetrisch ausgebildet ist, wird die richtige Zuordnung der Stechkontakte 22 zu den Adern 23 des Stromkabels 3 sichergestellt. Mittels einer Aufsteckkappe 25 wird ein Ausziehen der Stechkontakte 22 aus dem Stromkabel 3 wirksam verhindert.

Gemäß der Fig. 4 ist die Anschlußvorrichtung 4 mit einem Verbindungskabel für den jeweiligen Verbraucher 1 versehen. Eine solche vorgegebene elektrische Verbindung zwischen der Anschlußvorrichtung 4 und einem Verbindungskabel zu den Verbrauchern 1 ist jedoch keinesfalls zwingend. So könnte beispielsweise das Gehäuse 21 auf der der Aufnahme 24 für das Stromkabel 3 gegenüberliegenden Seite eine weitere Kabelaufnahme mit Stechkontakten aufweisen, um in gleicher Weise die elektrische Verbindung der Anschlußvorrichtung mit einem Verbindungskabel eines Verbrauchers 1 herzustellen.

Wie bereits ausgeführt wurde, ist die Auswerteschaltung 11 der Anschlußvorrichtung 4 auf die Kennung des jeweils zu betätigenden Verbrauchers 1 einzustellen. Damit diese Kennungseinstellung nicht zum Einsatz unterschiedlicher Anschlußvorrichtungen 4 führt, empfiehlt es sich, die Kennung erst dann vorzugeben, wenn der Einsatz einer Anschlußvorrichtung 4 für einen bestimmten Verbraucher 1 feststeht. Zu diesem Zweck kann die Auswerteschaltung 11 mit einer von außerhalb des Gehäuses zugänglichen Eingabeeinrichtung 26 für die ein- bzw. umstellbare Erkennungsstufe der Auswerteschaltung 11 versehen werden. Diese Eingabeeinrichtung 26 kann sehr unterschiedlich aufgebaut sein, weil es ja lediglich darum geht, eine von mehreren vorgegebenen Kennungen auszuwählen. Zu diesem Zweck könnte die Eingabeeinrichtung 26 mit Steuerschaltern versehen sein. Es wäre aber auch möglich, die Kennung über einen wahlweise durchtrennbaren Leiterkamm einzustellen oder aus einem Kennungsspeicher auszulesen. Bei einer mechanischen Einstellung der Kennung sollten die Einstellmittel im Bereich der Aufnahme 24 für das Stromkabel 3 angeordnet werden, damit nach dem Anschluß des Gehäuses 21 am Stromkabel 3 die Kennung nicht mehr unbeabsichtigt verstellt werden kann.

## Patentansprüche

1. Vorrichtung zum Anschließen wenigstens eines elektrischen Verbrauchers (1 ) an ein mit Steuersignalen für den Verbraucher (1) beaufschlagbares Stromkabel (3), insbesondere eines Fahrzeuges, mit in einem Gehäuse (21) zusammengeführten Anschlußleitungen einerseits für das Stromkabel (3) und anderseits für den Verbraucher (1), wobei das Gehäuse (21) eine Auswerteschaltung (11) für die über das Stromkabel (3) übertragbaren Steuersignale und einen an die Auswerteschaltung (11) angeschlossenen Leistungsschalter (12) für wenigstens eine verbraucherseitige Anschlußleitung aufweist, **dadurch gekennzeichnet, daß** der Leistungsschalter (12) über eine Strombegrenzungsschaltung (14) und über eine vorprogrammierte Taktstufe (13) ansteuerbar ist.

2. Vorrichtung nach Anspruch 1, **dadurch gekennzeichnet, daß** im Gehäuse (21) eine von der Auswerteschaltung (11) ansteuerbare Steuerschaltung für den anzuschließenden Verbraucher (1) vorgesehen ist.

3. Vorrichtung nach Anspruch 1 oder 2, **dadurch gekennzeichnet, daß** die Auswerteschaltung (11) eine auf Steuersignale für unterschiedliche Verbraucher (1) ein- bzw. umstellbare Erkennungsstufe aufweist.

4. Vorrichtung nach Anspruch 3, **dadurch gekennzeichnet, daß** die Erkennungsstufe über eine von außerhalb des Gehäuses (21) zugängliche Eingabeeinrichtung (26) ein- bzw. umstellbar ist.

5. Vorrichtung nach einem der Ansprüche 1 bis 4, **dadurch gekennzeichnet, daß** das Gehäuse Stechkontakte (22) zum Anschluß an das Stromkabel (3) und/oder ein Verbindungskabel zum Verbraucher (1) aufweist.

6. Stromversorgungsanlage für mehrere elektrische Verbraucher (1) eines Fahrzeuges, insbesondere eines Fahrzeuganhängers, mit einer Steuereinrichtung (2) für die einzelnen mit den Adern eines Stromkabels (3) verbundenen Anschlußvorrichtungen nach einem der Ansprüche 1 bis 5, **dadurch gekennzeichnet, daß** die Steuereinrichtung (2) eine Überwachungsschaltung (15) aufweist, die aus einem Geber (16) für den gesamten Verbraucherstrom und einer an diesen Geber (16) angeschlossenen, mit dem Sollwert des Verbraucherstromes für die eingeschalteten Verbraucher beaufschlagbaren Vergleicherstufe (17) besteht.

## Claims

1. A device for connecting at least one electrical consumer (1) to a power cable (3) which can be acted upon by control signals for the consumer (1), especially a vehicle, with connecting leads brought together in a housing (21) on the one hand for the power cable (3) and on the other hand for the consumer (1), wherein the housing (21) has an evaluation circuit (11) for the control signals transmittable via the power cable (3) and a power switch (12) connected to the evaluation device (11) for at least one consumer-side connecting lead, **characterised in that** the power switch (12) is controllable via a current limiting circuit (14) and a pre-programmed timing stage (13).

2. The device according to claim 1, **characterised in that** in the housing (21) there is provided a control circuit controllable by the evaluation circuit (11) for the consumer (1) to be connected.

3. The device according to claim 1 or claim 2, **characterised in that** the evaluation circuit (11) has a recognition stage which can be set or switched over to control signals for different consumers (1).

4. The device according to claim 3, **characterised in that** the recognition stage can be set or switched over via an input device (26) accessible from outside the housing (21).

5. The device according to any one of claims 1 to 4, **characterised in that** the housing has connectors (22) for connection to the power cable (3) and/or a connecting cable to the consumer (1).

6. A power supply installation for a plurality of electrical consumers (1) of a vehicle, especially a vehicle trailer, comprising a control device (2) for the individual connecting devices connected to the cores of a power cable (3) according to any one of claims 1 to 5, **characterised in that** the control device (2) has a monitoring circuit (15) which comprises a sensor (16) for the total consumer current and a comparison stage (17) connected to this sensor (16), which can be acted upon with the desired value of the consumer current for the connected consumers.

## Revendications

1. Dispositif pour le raccordement d'au moins un utilisateur (1) électrique à un câble électrique (3) pouvant être alimenté avec des signaux de commande pour l'utilisateur (1), en particulier d'un véhicule, avec des lignes de raccordement réunies dans un boîtier (21) d'une part pour le câble électrique (3) et d'autre part pour l'utilisateur (1), le boîtier (21) présentant un circuit d'analyse (11) pour les signaux de commande transmissibles au moyen du câble électrique (3) et un interrupteur de puissance (12) raccordé au circuit d'analyse (11) pour au moins une ligne de raccordement côté utilisateur, **caractérisé en ce que** l'interrupteur de puissance (12) peut être contrôlé au moyen d'un circuit de limitation de courant (14) et d'un étage de synchronisation (13) préprogrammé.

2. Dispositif selon la revendication 1, **caractérisé en ce qu'**il est prévu dans le boîtier (21) un circuit de commande pouvant être activé par le circuit d'analyse (11) pour l'utilisateur (1) à raccorder.

3. Dispositif selon la revendication 1 ou 2, **caractérisé en ce que** le circuit d'analyse (11) présente un étage de détection pouvant être réglé ou commuté sur des signaux de commande pour des utilisateurs (1) différents.

4. Dispositif selon la revendication 3, **caractérisé en ce que** l'étage de détection peut être réglé ou commuté au moyen d'un appareil d'entrée (26) accessible par l'extérieur du boîtier (21).

5. Dispositif selon l'une quelconque des revendications 1 à 4, **caractérisé en ce que** le boîtier présente des contacts à fiche (22) pour le raccordement au câble électrique (3) et/ou un câble de liaison pour l'utilisateur (1).

6. Installation d'alimentation électrique pour plusieurs utilisateurs (1) électriques d'un véhicule, en particulier d'une remorque de véhicule, avec un appareil de commande (2) pour les différents dispositifs de raccordement reliés aux brins d'un câble électrique (3) selon l'une quelconque des revendications 1 à 5, **caractérisée en ce que** l'appareil de commande (2) présente un circuit de contrôle (15), qui comprend un transmetteur (16) pour l'ensemble du courant utilisateur et un étage comparateur (17) raccordé à ce transmetteur (16) et pouvant être alimenté avec la valeur de consigne du courant utilisateur pour les utilisateurs enclenchés.
